# EUROPEAN PATENT SPECIFICATION

(11) **EP 3 498 413 B1**
(45) Date of publication and mention of the grant of the patent: **06.07.2022**
(21) Application number: 17839237.9
(22) Date of filing: 27.07.2017
(51) Int. Cl.: B23K 20/12, B23K 20/16, B23K 20/233

(54) **DISSIMILAR-METAL BONDING STRUCTURE, BONDING METHOD THEREFOR, AND ELECTRICAL-PRODUCT PRODUCTION METHOD**
UNGLEICHE METALLISCHE VERBINDUNGSSTRUKTUR, VERBINDUNGSVERFAHREN DAFÜR UND VERFAHREN ZUR HERSTELLUNG VON ELEKTROPRODUKTEN
STRUCTURE DE LIAISON DE MÉTAUX DISSEMBLABLES, PROCÉDÉ DE LIAISON CORRESPONDANT, ET PROCÉDÉ DE PRODUCTION DE PRODUIT ÉLECTRIQUE

(30) Priority: 10.08.2016 JP 2016157413
(43) Date of publication of application: 19.06.2019
(73) Proprietor: Kabushiki Kaisha Toshiba, Minato-ku Tokyo 105-8001 (JP)
(72) Inventor: TOMIOKA, Taizo, Tokyo 105-8001 (JP)
(74) Representative: Hoffmann Eitle
(86) International application number: PCT/JP2017/027235
(87) International publication number: WO 2018/030164

(56) References cited:
- JP-A- 2005 118 877
- JP-A- 2006 224 146

## Description

### [Technical Field]

Embodiments relate generally to a heterogeneous bonding structure of metals, a method for bonding the same and a method for manufacturing an electronic product.

### [Background Art]

The friction stir welding (FSW) has been tried to use as a method for bonging different kinds of metals. However, in the method for bonding different kinds of metals based on the conventional friction stir welding, there are demands for applying to hard meterials and stabilizing the bonding strucutre. It is desired to stably bond the different kinds of metals to one another.

### [Patent Literature]

[Patent Literature 1] JP 2005-28378 A (Kokai)
[Patent Literature 2] Japanese Patent No. 4404052

Further related art may be found in JP 2006 224146 A relating to a method for joining different kinds of material in accordance with the preamble of claim 4 and an heterogeneous bonding structure in accordance with the preamble of claim 1.

### [Summary of Invention]

The present invention is defined by the appened independent claims. The respective dependent claims describe optional features and distincit embodiments.

Embodiments provide a heterogeneous bonding structure of metals that is configured to stably bond the different kinds of metals, the method for bonding the same, and a method for manufacturing electronic produces.

In an embodiment, a heterogeneous bonding structure of metals includes a first member, a second member, and a first metal layer. The first member includes first metal. The second member includes second metal different from the first metal. The second member includes a stirring portion. The first metal layer is positioned between the first member and the second member. The first metal layer includes the second metal. The first metal layer contacts the stirring portion.

### [Brief Description of Drawings]

FIGS. 1A to 1F are schematic cross-sectional views showing one example of a method for bonding different kinds of metals according to an example not covered by the appended claims.
FIGS. 2A and 2B are schematic cross-sectional views showing a bonding portion of different kinds of metals according to a reference example;
FIGS. 3A and 3B are schematic cross-sectional views showing a bonding portion of different kinds of metals according to the example;
FIGS. 4A to 4F are schematic cross-sectional views showing one example of a method for bonding different kinds of metals according to an embodiment of the invention;
FIGS. 5A to 5C are schematic cross-sectional views showing one example of a method for bonding different kinds of metals according to a second embodiment;
FIGS. 6A to 6F are schematic cross-sectional views showing one example of a method for bonding different kinds of metals according to a third embodiment; and
FIG. 7 is a schematic cross-sectional view of a power module according to a fourth embodiment.

### [Embodiments of Invention]

Embodiments will be described hereinafter with reference to the accompanying drawings. In the drawings, similar components are marked with the same reference numeral. The embodiments relate to a bonding method and a bonding structure of aluminum and copper or copper alloy. A copper alloy is, for example, copper/tungsten (WCu). However, the embodiments are not limited to the bonding of aluminum and copper or copper alloy.

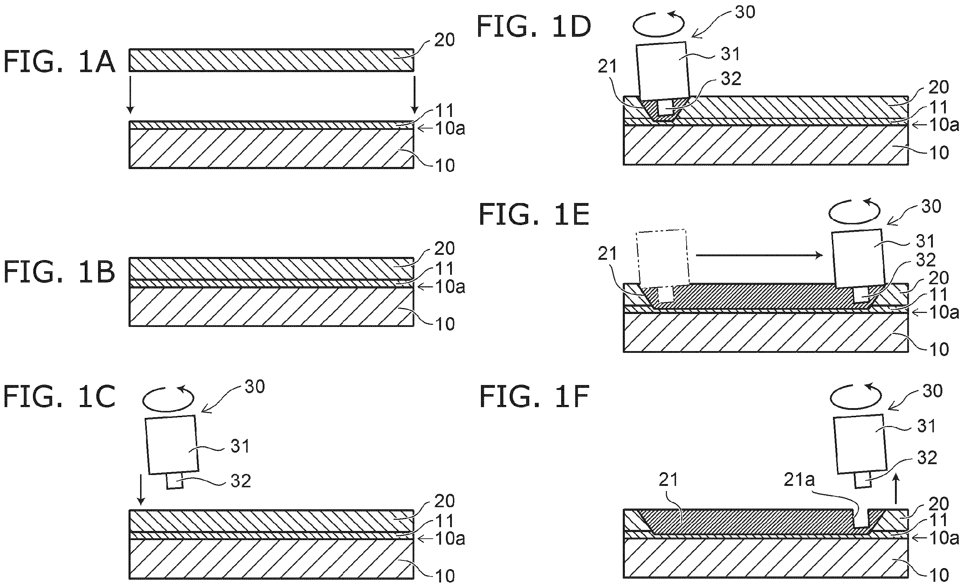

FIGS. 1A to 1F are schematic cross-sectional views showing one example of a method for bonding different kinds of metals, which by itself is not part of the present invention.

As shown in FIG. 1A, prepared are a first metal member 10 and a second metal member 20. In the example, the second metal member 20 is bonded to the first metal member 10. The first metal member 10 includes a first metal. The first metal is, for example, copper (Cu). The first metal member 10 of the example is, for example, alloy (WCu) of Cu and tungsten (W).

The second metal member 20 includes a second metal. The second metal is different from the first metal. When the first metal is Cu, or the first metal is WCu alloy, the second metal is, for example, aluminum (Al). A meting point of the second metal is lower than a melting point of the first metal or a melting point of alloy including the first metal, for example. A hardness of the second metal is, for example, lower than a hardness of the first metal or a hardness of alloy including the first metal.

Next, a first metal layer 11 is formed on a bonding surface 10a of the first metal member 10. The first metal layer 11 includes the same metal as the second metal. The first metal layer 11 includes Al. The first metal layer 11 is the same metal as the second metal member or the alloy including the second metal, for example. The first metal layer 11 of the embodiment is the Al layer.

The first metal layer 11 is formed on the first metal member 10, for example, by using a chemical vapor deposition method (CVD) or a physical vapor deposition method (PVD). When the second metal is Al, a gas including Al precursor gas including Al is used as a material gas in the CVD method. An Al target including Al is used as a material target in the PVD method.

Next, as shown in FIG. 1B, the second metal member 20 is brought into contact with the first metal member 10 via the first metal layer 11.

Next, as shown in FIG. 1C, a friction stir welding tool 30 is moved to a position above the second metal member 20. The friction stir welding tool 30 includes a shoulder 31 and a probe pin 32. The probe pin 32 protrudes from the shoulder 31. The probe pin 32 is directed toward the second metal member 20. The friction stir welding tool 30 is opposed to the second metal member 20, while being tilted against the outer surface of the second metal member 20. The tilt is referred to as an advancing angle.

Next, as shown in FIG. 1D, the friction stir welding tool 30 is rotated, and is run into the second metal member 20 toward the first metal layer 11. When the friction stir welding tool 30 roated is run into the second metal member 20, the second metal member 20 is softened by frictional heat, and plastic flow is generated around the friction stir welding tool 30 by the rotation of the friction stir welding tool 30.

A reference numeral "21" in FIG. 1D represents a portion where the "plastic flow" is generated. In the specification, the portion where the plastic flow is generated is referred to as a "stirring part". Hereinafter, the portion represented by the reference numeral "21" is referred to as a stirring part 21. The penetration depth of the probe pin 32 is controlled so as to reach a position near the first metal layer 11 such that a tip of the probe pin 32 reaches the first metal layer 11 or the stirring part 21 contacts the first metal layer 11. The stirring part 21 is formed, for example, inside the second metal member 20 and the first metal layer 11. The stirring part 21 may reach the first metal member 10 through the first metal layer 11.

Next, as shown in FIG. 1E, the second metal member 20 is welded to the first metal layer 11 and the first metal member 10 by the friction stirring using the friction stir welding tool 30. In the example, while rotating, the friction stir welding tool 30 is run into the second metal member 20, and is moved, for example, in parallel to the bonding surface 10a. Thereby, the second metal member 20 is welded to the first metal layer 11 by the friction stirring.

Next, as shown in FIG. 1F, the friction stir welding tool 30 is removed from the second metal member 20. Thereby, the bonding of the second metal member 20 and the first metal member 10 is completed, leaving the vestige in the second metal member 20, for example, a bored hole 21a through which the friction stir welding tool 30 is extracted.

In the example, the first metal layer 11 including the same metal as the second metal member 20 is formed on the bonding surface 10a of the first metal member 10. The second metal member 20 is brought into contact with the first metal member 10 via the first metal layer 11. In this configuration, the second metal member 20 is welded to the first metal member 10 together with the first metal layer 11 by the friction stirring.

As described above, according to the example, it is possible to stably bond the second metal member 20 to the first metal member 10 in comparison with the case where the first metal layer 11 is not provided on the bonding surface 10a of the first metal member 10.

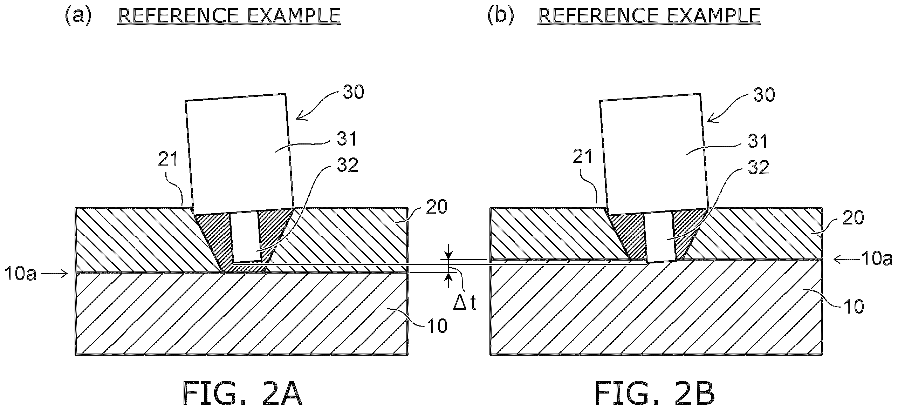

FIGS. 2A and 2B are schematic cross-sectional views showing a bonding portion of different kinds of metals according to a reference example.

For example, as shown in FIG. 2(a), in the case where the second metal member 20 is directly contacted to the first metal member 10, a tip of the probe pin 32 should be positioned inside the second metal member 20. However, it is difficult to control such that there is a slight distance between the tip of the probe pin 32 and the first metal member 10. Thus, it is difficult for the respective industrial products (hereinafter, simply referred to as the products) to reproducibly achieve the uniform bonding of different kinds of metals, for example, using the friction stir welding.

For example, as shown in FIG. 2B, it is assumed that there is a thickness variation "Δt" of the first metal member 10 in the products shown in FIG. 2A. It is considered that there is no error of the penetration depth of the friction stir welding tool 30 for both of FIGS. 2(a) and 2(b). In such a case, whereas the tip of the probe pin 32 is positioned inside the second metal member 20 in the product shown in FIG. 2A, the tip of the probe pin 32 reaches the inside of the first metal member 10 in the product shown in FIG. 2B.

Thus, even if the friction stir welding tool 30 is accurately controled, it is difficult for the respective products of the reference example to reproducibly achieve the uniform bonding of different kinds of metals.

In the reference example, the second metal member 20 is bonded to the first metal member 10 while generating intermetallic compound. The amount of intermetallic compound generated depends on the distance between the tip of the probe pin 32 and the first metal member 10. The amount of intermetallic compound affects, for example, the "bonding strength" of the first metal member 10 and the second metal member 20.

In the reference example in which it is difficult to reproducibly achieve the uniform bonding of different kinds of metals, for example, the variation of the "bonding strength" of the first metal member 10 and the second metal member 20 is easily enlarged.

Moreover, the tip of the probe pin 32 reaches the inside of the first metal member 10 in the reference example shown in FIG. 2B. The first metal member 10 is a metal harder than the second metal member 20. Thus, the probe pin 32 is easily worn out.

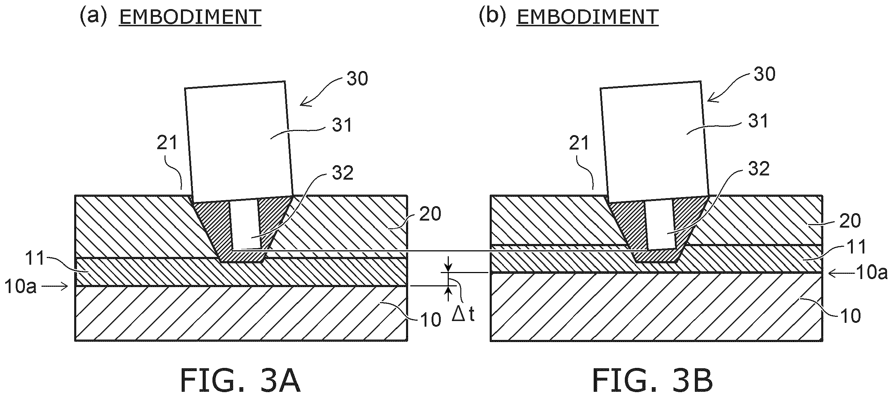

FIGS. 3A and 3B are schematic cross-sectional views showing a bonding portion of different kinds of metals according to the example

In contrast to the reference example, the second metal member 20 contacts the first metal member 10 via the first metal layer 11 in the example. The tip of the probe pin 32 is positioned inside the second metal member 20 in the same manner with the reference example. When the first metal member 10 has the thickness variation Δt as well as the reference example, it is possible to keep the positon of the tip of the probe pin 32 inside the first metal layer 11 as shown in FIGS. 3A and 3B.

The first metal layer 11 is made of, for example, alloy including the second metal or the same metal as the second metal member 20. For example, when the second metal member 20 is made of Al, the first metal layer 11 is also made of Al. Thus, when a distance varies between the tip of the probe pin 32 and the first metal member 10, the "bonding strength" of the first metal member 10 and the second metal member 20 is not easily changed in comparison with the reference example.

Thus, in the example the "variation" of bonding strength" of the first metal member 10 and the second metal member 20 can be reduced among the products comparing with the reference example.

As described above, the example can provide the structure and method of the heterogeneous bonding of metals, by which the stably bonding of the different kinds of metals to one another can be achieved.

Furthermore, according to the example the worn-out amount of the probe pin 32 can also be suppressed in comparison with the reference example.

When the friction stir welding is used for the bonding of different kinds of metals, the metal, into which the probe pin 32 is run, is selected to hace, for example, "lower melting piont" and "lower hardness" amang two metals.

In the reference example, the probe pin 32 is also run into the first metal member 10 having a higher hardness than the second metal member 20. Thus, the probe pin 32 is easily worn out.

In contrast, since the first metal layer 11 is provided in the embodiment, it is possible to reduce a probability of running the probe pin 32 into the first metal member 10 in comparison with the reference example. When the first metal layer 11 is made of, for example, the same metal as the second metal member 20, the hardness thereof is the same. Therefore, according to the example the worn-out amount of the probe pin 32 can be suppressed in comparison with the reference example.

### <First embodiment>

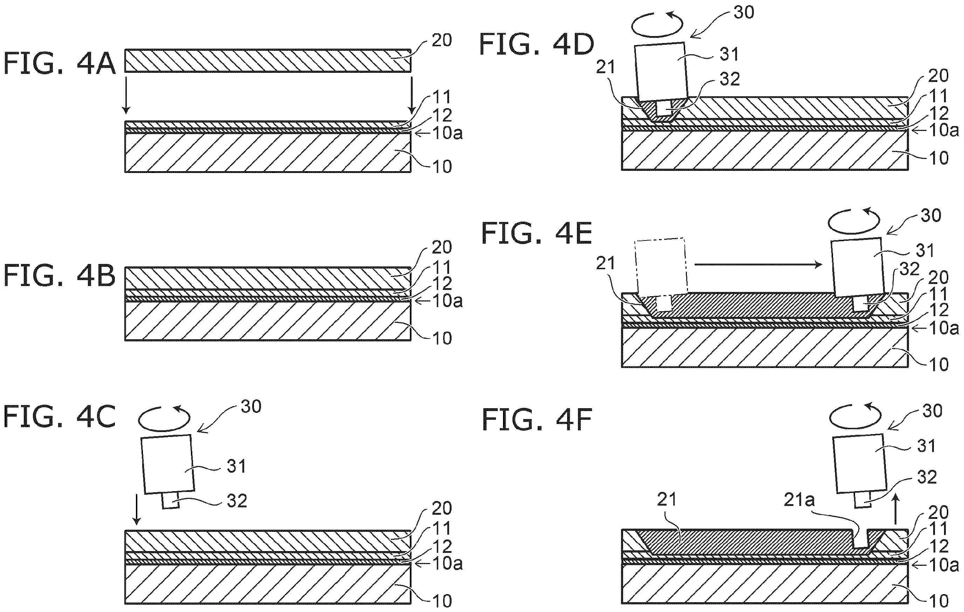

FIGS. 4A to 4F are schematic cross-sectional views showing one example of a method for bonding different kinds of metals according to an embodiment.

As shown in FIGS. 4A to 4F, the embodiment is different from the example shown in FIGS. 1A to 1F in that a second metal layer 12 is provided between the first metal member 10 and the first metal layer 11.

The second metal layer 12 includes a third metal of a transition metal which is different from the first metal and the second metal. The second metal layer 12 has a role to improve the adhesion between the first metal member 10 and the first metal layer 11. The third metal is titanium (Ti) or chromium (Cr).

In the embodiment, as shown in FIG. 4A, the second metal layer 12 is formed on the bonding surface 10a of the first metal member 10. The first metal member 10 of the embodiment is WCu. The second metal layer 12 includes, for example, Ti. The second metal layer 12 of the embodiment is the Ti layer. Then, the first metal layer 11 is formed on the second metal layer 12. The first metal layer 11 of the embodiment is an Al layer.

Next, as shown in FIG. 4B, the second metal member 20 is brought into contact with the first metal member 10 via the first metal layer 11 and the second metal layer 12. The second metal member 20 of the embodiment is Al.

In the same manner with the example, while rotating the friction stir welding tool 30, the friction stir welding tool 30 is run into the second metal member 20 toward the first metal layer 11 (FIGS. 4C to 4D).

Then, while rotating, the friction stir welding tool 30 which penetrates into the second metal member 20, for example, is moved in parallel to the bonding surface 10a. Thereby, the second metal member 20 is welded to the first metal layer 11 by the friction stirring (FIG. 4E). Also in the embodiment, the stirring pat 21 is formed, for example, in the metal member 20 and the first metal layer 11. The stirring part 21 may reach the second metal layer 12 through the first metal layer 11. Furthermore, the stirring part 21 may reach the first metal member 10 through the first metal layer 11 and the second metal layer 12.

Next, the friction stir welding tool 30 is removed from the second metal member 20 (FIG. 4F). Thereby, according to the embodiment, the heterogeneous bonding of the second metal member 20 to the fist metal member 10 is completed.

As described above, also in the embodiment, advantages similar to the example can be obtained. Furthermore, according to the embodiment, the second metal layer 12 is provided between the first metal member 10 and the first metal layer 11. Thereby, in the embodiment, the advantage such that the adhesion is improved between the first metal member 10 and the first metal layer 11 can be further obtained in comparison with the example.

### <Second embodiment>

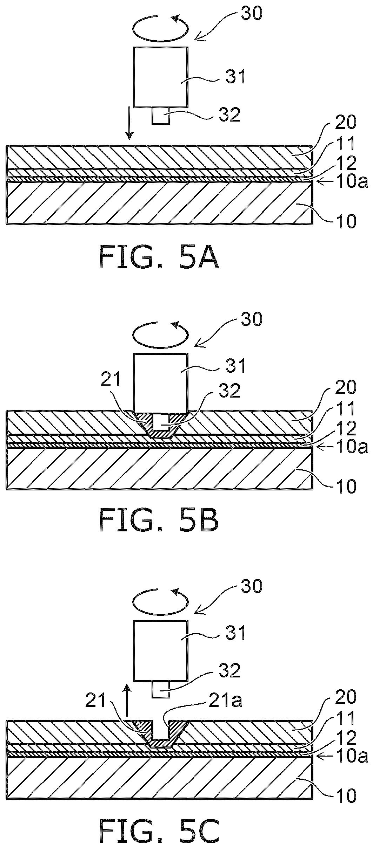

FIGS. 5A to 5C are schematic cross-sectional views showing one example of a method for bonding different kinds of metals according to a second embodiment.

As shown in FIGS. 5A to 5C, the second embodiment is different in applying to a point bonding from the first embodiment shown in FIGS. 1A to 1F.

In the example, as shown in FIG. 1E, while rotating, the friction stir welding tool 30 is run into the second metal member 20, for example, and is moved in parallel to the bonding surface 10a. Thereby, the second metal member 20 is welded to the first metal layer 11 by the friction stirring.

In the second embodiment, as shown in FIG. 5A, while rotating, the friction stir welding tool 30 is run into the second metal member 20 toward the first metal layer 11.

Next, as shown in FIG. 5B, the second metal member 20 is welded to the first metal layer 11 by the friction stirring using the friction stir welding tool 30. Also in the second embodiment, the stirring part 21 is formed, for example, in the second metal member 20 and the first metal layer 11. The stirring part 21 may reach the second metal layer 12 through the first metal layer 11. Furthermore, the stirring part 21 may reach the first metal member 10 through the first metal layer 11 and the second metal layer 12.

Next, as shown in FIG. 5C, the friction stir welding tool 30 is removed from the second metal member 20, for example, without being moved in parallel to the bonding surface 10a. Thereby, the heterogeneous bonding of the second metal member 20 to the first metal member 10 is completed according to the second embodiment.

In this manner, the embodiment can also be applied to the "point" welding by the friction stirring. That is, the friction stir welding described in the specification includes the friction stir "point" welding as well.

Also in the second embodiment, similar advantages to the advantages described in the example and the first embodiment can be obtained.

### <Third embodiment>

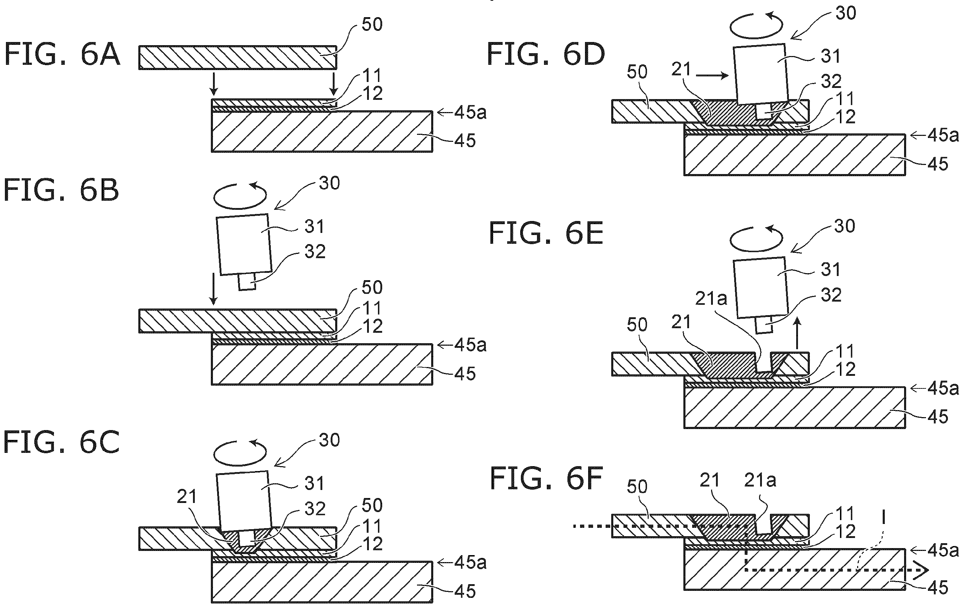

FIGS. 6A to 6F are schematic cross-sectional views showing one example of a method for bonding different kinds of metals according to a third embodiment.

As shown in FIGS. 6A to 6F, the third embodiment is different from the example shown in FIGS. 1A to 1F in that the bonding structure and method for bonding according to the embodiment are applied to an electrical contact. An example of the electrical contact is the connection of an interconnection and a terminal, for example. It may be a connection of an interconnection and other interconnection. The terminal and the interconnection are electrical connection members used for electronic products.

In the third embodiment, as shown in FIG. 6A, the second metal layer 12 is formed, for example, on a portion of a bonding surface 45a in a terminal 45. The second metal layer 12 may be formed on the whole surface of the bonding surface 45a in the terminal 45. The terminal 45 is made of, for example, alloy of iron (Fe) and nickel (Ni) so called the 42 alloy. The second metal layer 12 of the embodiment is, for example, a Ti layer. Then, the first metal layer 11 is formed on the second metal layer 12. The first metal layer 11 of the embodiment is an Al layer. Then, an interconnection 50 is brought into contact with the terminal 45 via the first metal layer 11 and the second metal layer 12. The interconnection 50 is, for example, made of Al.

Next, as shown in FIG. 6B and 6C, while rotating, the friction stir welding tool 30 is run into the interconnection 50 toward the first metal layer 11.

Next, as shown in FIG. 6D, while rotating, the friction stir welding tool 30, which is run into the interconnection 50, for example, is moved in parallel to the bonding surface 45a. Thus, the interconnection 50 is welded to the first metal layer 11 by the friction stirring. The bonding may be the friction stir "point" welding. The stirring part 21 is, for example, formed in the first metal layer 11 and the the interconnection 50 up to the surface thereof. The stirring part 21 may reach the second metal layer 12 through the first metal layer 11. Furthermore, the stirring part 21 may reach the terminal 45 through the first metal layer 11 and the second metal layer 12.

Next, as shown in FIG. 6E, the friction stir welding tool 30 is removed from the interconnection 50. Thereby, the heterogeneous bonding of the interconnection 50 and the terminal 45 is completed according to the third embodiment.

In the third embodiment, as shown in FIG. 6F, for example, an electrical current I flows from the interconnection 50 to the terminal 45 through the stirring pat 21. In this manner, the bonding structure and the bonding method of the embodiment can be applied to the connection of electrical connection members of the electronic products.

As described above, according to the third embodiment, for example, electrical products (electronic products) can be obtained, which include stable electrical contacts with small variations of contact resistance among the products and the small power loss variations.

Also in the third embodiment, for example, advantages similar to the advantages described in the example and the first embodiment can be obtained.

### <Fourth embodiment>

The fourth embodiment relates to an example of the product based on the bonding structure and the bonding method of the embodiment. In the fourth embodiment, a semiconductor device is shown as the example of the product.

An example of the semiconductor device is, for example, a power semiconductor device. An example of the power semiconductor device is a power module.

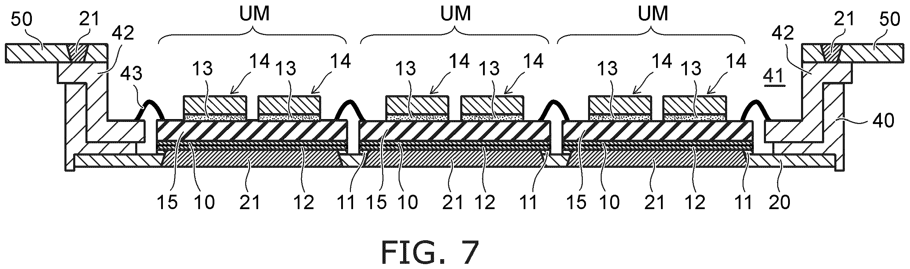

FIG. 7 is a schematic cross-sectional view of a power module according to a fourth embodiment.

As shown in FIG. 7, the power module includes a case 40. Multiple semiconductor elements 14 including power semiconductor devices such as IGBT, power MOSFET, a diode or the like are housed inside the case 40. The case 40 is, for example, made of resin. The case 40 includes a housing portion 41.

The second metal member 20 is provided, for example, on the back surface of the case 40. The second metal member 20 is fixed to the case 40. The first metal layer 11 is provided on the second metal member 20. The second metal layer 12 is provided on the first metal layer 11. The first metal member 10 is provided on the second metal layer 12. The first metal member 10 is formed on the back surface of an insulative substrate 15. The insulative substrate 15 is, for example, made of ceramic.

The second metal member 20 is welded to the first metal member 10 by the friction stirring, for example, according to one of the methods for bonding different kinds of metals described in the first and second embodiments.

Electrode patterns (not shown) are formed on a front surface of the insulative substrate 15. The semiconductor element 14 is bonded to the electrode patterns (not shown) via a solder layer 13. In the fourth embodiment, the second metal member 20 serves as a heat sink. The heat sink dissipates the heat generated in the semiconductor element 14.

A structure body is referred to as a unit module UM, which includes the first metal member 10, the first metal layer 11, the second metal layer 12, the solder layer 13, the semiconductor element 14, and the insulative substrate 15.

The power module of the fourth embodiment includes, for example, three unit modules UM on the second metal member 20. Any number of the unit modules can be provided, and the unit modules UM are housed in the housing portion 41.

The case 40 includes an external terminal 42. The external terminal 42 is electrically connected to the unit module UN via an interconnection 43. The unit modules UM are electrically connected to each other as necessary via the interconnection 43.

The interconnection 50 is bonded to the external terminal 42. In the embodiment, the interconnection 50 is, for example, a bus bar. The interconnection 50 is welded to the external terminal 42 by the friction stirring, for example, according to one method for bonding the different kinds of metals described in the first and second embodiments.

In this manner, the bonding structure and the method of bonding in the embodiment can be applied in the power module to, for example,
(1) the bonding of the second metal member 20 (for example, heat sink) and the first metal member 10 of the insulative substrate 15
(2) the bonding of the external terminal 42 and the interconnection 50 (for example, bus bar).

As described above, according to the power module, the bonding of the second metal member 20 (for example, heat sink) to the first metal member 10 of the insulative substrate 15, and the bonding of the external terminal 42 to the interconnection 50 (for example, bus bar) are stabilized. Thereby, for example, the second metal member 20 and the first metal member 10, and the external terminal 42 and the interconnection 50 are not easily disconnected. Thus, the power module can be obtained, which is reliable and is stably used for a long time.

Furthermore, according to the power module, it is also possible to reduce the variation of the contact resistance between the external terminal 42 and the interconnection 50 among the power modules manufactured. Thus, for example, a high quality power module can be obtained, which has small variation of power loss among the power modules manufactured.

The bonding structures and the methods for bonding described in the first and second embodiments may be applied to one of (1) and (2) described above in the power module.

The products based on the bonding structures and the methods for bonding according to the embodiment may include an electric motor and an electric generator or the like other than the semiconductor device. For example, in the electric motor and the electric generator, the bonding structures and the methods for bonding described in the first and second embodiments may be applied to the connection of a stator coil and a crossover.

As described above, the first to fourth embodiments have been explained. However, the embodiment is not limited to the first to fourth embodiments described above. Those embodiments have been presented as examples, and not intended to limit the scope of the invention. Those novel embodiments are possible to be executed in other various aspects, and various omissions, replacements, and modifications can be made within the scope of the appended claims.

For example, in the embodiments, the specific material examples are shown with respect to the first metal member 10, the second metal member 20, the first metal layer 11, and the second metal layer 12. However, it is possible to change appropriately the materials of the first metal member 10, the second metal member 20, the first metal layer 11, and the second metal layer 12.

## Claims

1. A heterogeneous bonding structure of metals, comprising:
a first member (10) including first metal;
a second member (20) including second metal different from the first metal, the second metal including a stirring part (21);
a first metal layer (11) being positioned between the first member (10) and the second member (20), the first metal layer (11) including the second metal and contacting the stirring part (21); and **characterized by** further comprising
a second metal layer (12) positioned between the first member (10) and the first metal layer (11), the second metal layer (12) including third metal different from the first metal and the second metal; wherein the third metal is titanium or chromium.

2. The heterogeneous bonding structure of metals according to claim 1, wherein
a melting point of the second metal is lower than a melting point of the first metal or a melting point of alloy including the first metal.

3. The heterogeneous bonding structure of metals according to claim 1, wherein
a hardness of the second metal is lower than a hardness of the first metal or a hardness of alloy including the first metal.

4. A method for bonding different kinds of metals, comprising:
forming a first metal layer (11) on a first member (10) including first metal, the first metal layer (11) including second metal different from the first metal;
bringing a second member (20) into contact with the first metal layer (11), the second member (20) including the second metal;
welding the second member (20) and the first metal layer (11) by friction stirring, wherein a friction stir welding tool (30) is run into the second member (20) toward the first metal layer (11); and **characterized by** further comprising
forming a second metal layer (12) on the first member (10) before forming the first metal layer (11), the second metal layer (12) including third metal different from the first metal and the second metal,
the first metal layer (11) being formed on the second metal layer (12);
wherein the third metal is titanium or chromium.

5. A method for manufacturing an electronic product according to the method of claim 4, wherein:
the first member (10) is a first electrical connection member (45) including the first metal, and the second member (20) is a second electrical connection member (50) including the second metal.

## Patentansprüche

1. Heterogene Bondierstruktur von Metallen, umfassend:
ein erstes Bauteil (10), das ein erstes Metall beinhaltet;
ein zweites Bauteil (20), das ein zweites Metall, das ein anderes ist als das erste Metall, enthält, wobei das zweite Metall einen Rührabschnitt (21) beinhaltet;
wobei eine erste Metallschicht (11) zwischen dem ersten Bauteil (10) und dem zweiten Bauteil (20) positioniert ist, wobei die erste Metallschicht (11) das zweite Metall enthält und den Rührabschnitt (21) kontaktiert, und **dadurch gekennzeichnet ist, dass** sie weiter umfasst:
eine zweite Metallschicht (12), die zwischen dem ersten Bauteil (10) und der ersten Metallschicht (11) positioniert ist, wobei die zweite Metallschicht (12) ein drittes Metall enthält, das ein anderes ist als das erste Metall und das zweite Metall, wobei das dritte Metall Titan oder Chrom ist.

2. Heterogene Bondierstruktur von Metallen gemäß Anspruch 1, wobei
ein Schmelzpunkt des zweiten Metalls niedriger als ein Schmelzpunkt des ersten Metalls oder ein Schmelzpunkt einer, das erste Metall enthaltenden Legierung ist.

3. Heterogene Bondierstruktur von Metallen gemäß Anspruch 1, wobei
eine Härte des zweiten Metalls niedriger als eine Härte des ersten Metalls oder eine Härte einer das erste Metall enthaltenden Legierung ist.

4. Verfahren zum Bondieren unterschiedlicher Arten von Metallen, umfassend:
Ausbilden einer ersten Metallschicht (11) auf einem ersten Bauteil (10), das ein erstes Metall enthält, wobei die erste Metallschicht (11) ein zweites Metall enthält, das ein anderes als das erste Metall ist;
Bringen eines zweiten Bauteils (20) in Kontakt mit der ersten Metallschicht (11), wobei das zweite Bauteil (20) das zweite Metall enthält;
Verschweißen des zweiten Bauteils (20) und der ersten Metallschicht (11) durch Reibungsrühren, wobei ein Reibungsrühr-Schweißwerkzeug (30) in das zweite Bauteil (20) zur ersten Metallschicht (11) hin geführt wird; und **dadurch gekennzeichnet, dass** es weiter umfasst:
Ausbilden einer zweiten Metallschicht (12) auf dem ersten Bauteil (10) vor Ausbilden der ersten Metallschicht (11), wobei die zweite Metallschicht (12) ein drittes Metall enthält, das ein anderes ist als das erste Metall und das zweite Metall,
wobei die erste Metallschicht (11) auf der zweiten Metallschicht (12) gebildet ist; wobei das dritte Metall Titan oder Chrom ist.

5. Verfahren der Herstellung eines elektronischen Produktes gemäß dem Verfahren von Anspruch 4, wobei:
das erste Bauteil (10) ein erstes elektrisches Verbindungsbauteil (45) ist, das das erste Metall enthält, und das zweite Bauteil (20) ein zweites elektrisches Verbindungsbauteil (50) ist, welches das zweite Metall enthält.

## Revendications

1. Structure de liaison hétérogène de métaux, comprenant :
un premier élément (10) incluant un premier métal ;
un second élément (20) incluant un deuxième métal différent du premier métal, le deuxième métal incluant une partie de malaxage (21) ;
une première couche de métal (11) étant positionnée entre le premier élément (10) et le second élément (20), la première couche de métal (11) incluant le deuxième métal et étant en contact avec la partie de malaxage (21) ; et
**caractérisé en ce qu'**il comprend en outre
une seconde couche de métal (12) positionnée entre le premier élément (10) et la première couche de métal (11), la seconde couche de métal (12) incluant un troisième métal différent du premier métal et du deuxième métal ; dans lequel le troisième métal est du titane ou du chrome.

2. Structure de liaison hétérogène de métaux selon la revendication 1, dans laquelle
un point de fusion du deuxième métal est inférieur à un point de fusion du premier métal ou un point de fusion d'un alliage incluant le premier métal.

3. Structure de liaison hétérogène de métaux selon la revendication 1, dans laquelle
une dureté du deuxième métal est inférieure à une dureté du premier métal ou une dureté d'un alliage incluant le premier métal.

4. Procédé de liaison de différents types de métaux, comprenant :
la formation d'une première couche (11) sur un premier élément (10) incluant un premier métal, la première couche de métal (11) incluant un deuxième métal différent du premier métal ;
l'apport d'un second élément (20) en contact avec la première couche de métal (11), le second élément (20) incluant le deuxième métal ;
le soudage du second élément (20) et de la première couche de métal (11) par friction malaxage, dans lequel un outil de soudage par friction malaxage (30) atteint le second élément (20) jusqu'à la première couche de métal (11) ; et
**caractérisé en ce qu'**il comprend en outre
la formation d'une seconde couche de métal (12) sur le premier élément (10) avant la formation de la première couche de métal (11), la seconde couche de métal (12) incluant un troisième métal différent du premier métal et du deuxième métal,
la première couche de métal (11) étant formée sur la seconde couche de métal (12) ;
dans lequel le troisième métal est du titane ou du chrome.

5. Procédé de fabrication d'un produit électronique selon le procédé de la revendication 4, dans lequel :
le premier élément (10) est un premier élément de connexion électrique (45) incluant le premier métal, et le second élément (20) est un second élément de connexion électrique (50) incluant le deuxième métal.
